(19) Europäisches Patentamt
European Patent Office
Office européen des brevets

(11) Veröffentlichungsnummer : **0 050 230**
**B1**

(12) # EUROPÄISCHE PATENTSCHRIFT

(45) Veröffentlichungstag der Patentschrift : **26.06.85**

(51) Int. Cl.[4] : **C 08 G 8/04**

(21) Anmeldenummer : **81107489.7**

(22) Anmeldetag : **21.09.81**

(54) **Verfahren zur Herstellung von geruchsfreien Kondensationsprodukten aus Phenolen und Isobutyraldehyd durch Kondensation der genannten Stoffe und anschliessende Wasserdampfdestillation.**

(30) Priorität : **18.10.80 DE 3039360**

(43) Veröffentlichungstag der Anmeldung : **28.04.82 Patentblatt 82/17**

(45) Bekanntmachung des Hinweises auf die Patenterteilung : **26.06.85 Patentblatt 85/26**

(84) Benannte Vertragsstaaten : **DE FR GB IT NL**

(56) Entgegenhaltungen :
**DE-A- 2 805 684**
**DE-A- 2 805 763**
**GB-A- 1 302 801**
**US-A- 2 176 951**
**US-A- 2 231 860**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Nieberle, Juergen, Dr.**
**Prager Strasse 23**
**D-6700 Ludwigshafen (DE)**
Erfinder : **Peters, Karl-Clemens, Dr.**
**Otto-Schmidt-Gross-Strasse 4**
**D-6702 Bad Duerkheim (DE)**
Erfinder : **Reuther, Wolfgang, Dr.**
**Am Pferchelhang 16**
**D-6900 Heidelberg-Ziegelhausen (DE)**
Erfinder : **Bankowsky, Heinz-Hilmar**
**Otto-Dill-Strasse 1C**
**D-6710 Frankenthal (DE)**

**EP 0 050 230 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Kondensationsprodukte aus Phenolen und Isobutyraldehyd sind schon längere Zeit bekannt. Man erhält sie, wie beispielsweise in den DE-OSen 2 805 763 und 2 805 684 beschrieben ist, durch Kondensation von Isobutyraldehyd mit Phenolen in Gegenwart saurer Katalysatoren und anschließende Neutralisation der erhaltenen Produkte und destillativer Abtrennung des gebildeten Reaktionswassers.

Nachteilig bei den bisher beschriebenen Herstellungsmethoden ist die Bildung von Nebenprodukten, die in Mengen von bis zu 2 % anfallen, z. B. 2,2-Dimethylcumarane, die bei vielen technischen Anwendungen, z. B. in der Druckfarbenindustrie, zu erheblichen Geruchsproblemen führen.

Das Ziel der Erfindung bestand darin eine Verfahrensführung zu entwickeln, die zu nebenprodukt- und damit geruchsfreien Endprodukten führt.

Dieses Ziel wurde gemäß den Patentansprüchen überraschenderweise mittels einer Wasserdampfdestillation erreicht, durch die den Endprodukten im Anschluß an die obengeschilderten Verfahrensmaßnahmen die genannten Nebenprodukte quantitativ entzogen werden können.

Die Möglichkeit, durch eine Wasserdampfdestillation das Problem zu lösen, ist insofern überraschend, als man annehmen mußte, daß unter den Bedingungen einer derartigen Operation — Einwirkung von Wasser und Dampf bei Temperaturen von über 100 °C innerhalb einer oder mehr Stunden — die Produkte chemisch verändert werden könnten (Hydrolyse oder abermalige Bildung der erwähnten Dimethylcumarane). Die Herstellung der Kondensationsprodukte — im folgenden der Einfacheit halber « Harze » genannt, erfolgt zunächst in an sich bekannter Weise nach den Methoden, wie sie beispielsweise in den obengenannten Publikationen beschrieben sind. Hierzu legt man entweder das entsprechende Phenol und den Katalysator vor und setzt Isobutyraldehyd fortlaufend oder stufenweise zu, wobei drucklos oder unter Druck gearbeitet werden kann ; man kann auch die Reaktionsteilnehmer gleichzeitig dem vorgesehenen Reaktionsgefäß im Lauf der Umsetzung oder auf einmal zuführen. Das zugegebene Molverhältnis Isobutyraldehyd zu Phenol beträgt 0,5 : 1 bis 1,5 : 1, vorzugsweise 0,7 bis 1,3 : 1. Die Reaktionstemperaturen liegen im allgemeinen bei 80 bis 120 °C, die Reaktionsdauer selbst beträgt 2 bis 6 Stunden.

Die Erweichungspunkte der so erhältlichen Kondensate liegen im allgemeinen zwischen 60 und 180 °C. Geeignete Phenole, die zur Herstellung solcher Phenol-Isobutyraldehyd-Kondensate benutzt werden können, sind insbesondere solche der allgemeinen Formel

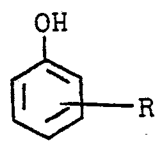

Hierin bedeutet R ein Wasserstoff-, Chlor- oder Bromatom oder eine Alkylgruppe mit 1 bis 18 C-Atomen in irgendeiner ihrer isomeren Formen, die in der o-, m- oder p-Stellung zur Hydroxylgruppe stehen, eine alicyclische Gruppe mit 5 bis 18 C-Atomen, z. B. die Cyclopentyl-, Cyclohexyl-, Methylcyclohexyl- oder Butylcyclohexylgruppe, eine aromatische Gruppe oder Aralkylgruppe mit 6 bis 18 C-Atomen, wie die Phenyl-, α-Methylbenzyl-, Benzyl- oder Cumylgruppe. Weiterhin können phenolische Alkyl-, Cycloalkyl-, Aryl- und Aralkylketone sowie phenolische Alkyl-, Cycloalkyl-, Aryl- und Aralkylcarbonsäuren verwendet werden.

Als Katalysatoren kommen Säuren oder zu Säuren hydrolisierbare Stoffe, wie konzentrierte Salzsäure, Schwefelsäure, aromatische Sulfonsäuren, sowie Phosphorhalogenide, wie Phosphortrichlorid, Phosphoroxychlorid und Phosphorpentachlorid in Betracht. Die erforderliche Menge an Katalysator beträgt im allgemeinen weniger als 5, insbesondere 0,1 bis 1 Gew.-% — bezogen auf Menge an Phenol und Isobutyraldehyd.

Zwar ist die Verwendung eines an der Reaktion nicht beteiligten Lösungsmittels, wie Xylol, möglich, mit dem das entstehende Wasser abgetrennt werden kann ; man kann aber auch mit überschüssigem Isobutyraldehyd als Lösungsmittel das Wasser auskreisen. Es ist daher vorteilhaft, mit Molverhältnissen von Isobutyraldehyd zu Phenol über 1 zu arbeiten. Dadurch wird gewährleistet, daß sich das Phenol als das wertvollere Ausgangsprodukt weitgehend umsetzt. Außerdem liegen dann die Erweichungspunkte über 90 °C, was für die meisten Verwendungszwecke von Vorteil ist.

Nach der Zugabe von Isobutyraldehyd wird bei erhöhter Temperatur (80 bis 120 °C) bis zum gewünschten Kondensationsgrad das entstehende Wasser ausgekreist. Danach wird das Reaktionsgemisch neutralisiert und alle flüchtigen Produkte gegebenenfalls unter vermindertem Druck abdestilliert. Die Neutralisation geschieht am einfachsten mit Ammoniak oder Aminen ; man kann aber auch Alkalilauge verwenden, muß aber dann in manchen Fällen die Neutralsalze entfernen, falls diese im Endprodukt nicht erwünscht sind. Die Neutralisation ist notwendig, da beim Erhitzen des entstandenen Novolaks im sauren Bereich, z. B. bei der Entfernung der hochsiedenden Begleitstoffe, sich in großen Mengen Spaltprodukte bilden. Es handelt sich hierbei hauptsächlich um unsubstituierte bzw. substituierte 2,2-Dimethylcumarane.

Erfindungsgemäß erfolgt nun eine anschließende Wasserdampfdestillation, bei der die entstandenen Nebenprodukte bzw. eventuell noch nicht umgesetztes Ausgangsmaterial, wie z. B. Phenol, aus dem Harz ausgetrieben wird. Die Destillation wird zweckmäßigerweise unter Normaldruck innerhalb von 1 bis 3 Stunden mit Wasserdampf, der eine Temperatur bis zu 160 °C aufweist, durchgeführt.

Beispiel (erfindungsgemäß)

Es wird gemäß dem Vergleichsbeispiel verfahren. Hierbei wird die zur Neutralisation notwendige Ammoniaklösung in 2 Portionen, 15,3 kg vor Destillation unter Normaldruck, dann nochmals 5,3 kg vor der Vakuumdestillation zugesetzt. Als zusätzliche Maßnahme wird eine 1-stündige Wasserdampfdestillation angeschlossen.

Vergleichsbeispiel

437,5 kg Phenol und 4,7 kg p-Toluolsulfonsäure werden zusammen vorgelegt und auf 50 °C erhitzt. Zu der entstandenen Schmelze werden 368,5 kg iso-Butyraldehyd zugetropft, dabei steigt die Temperatur bis ca. 80 °C an. Danach wird 4 Stunden lang bei ca. 100 °C Wasser ausgekreist. Anschließend werden 20,6 kg konzentrierte Ammoniaklösung unter Rühren zugegeben und zunächst bei Normaldruck Restwasser und überschüssiger iso-Butyraldehyd, dann unter vermindertem Druck bis 160 °C höher siedende Bestandteile abdestilliert.

Die erhaltenen Harze unterscheiden sich wie folgt:

| | Vergleichsbeispiel | Beispiel (erfindungsgemäß) |
|---|---|---|
| E.P. nach DIN 52011 | 120 °C | 128 °C |
| Nichtflüchtiger Anteil (2 h 125 °C) | 98,4% | 99,8% |
| Farbe | dunkelrotbraun | gelb bis hellbraun |
| Geruch+) | riecht | geruchlos |

+) Zur Geruchsprobe wurden beide Harze 50 %ig in Ethanol gelöst. Die Lösung wird auf ungestrichenes Papier aufgetragen und 5 Min. bei Raumtemperatur getrocknet. Danach wurden die Proben in ein Twist-Off-Glas eingeschlossen und der Geruch beurteilt.

**Patentanspruch**

Verfahren zur Herstellung von nebenprodukt- und geruchsfreien Kondensationsprodukten aus Phenolen und Isobutyraldehyd durch Reaktion der Phenole mit Isobutyraldehyd bei erhöhter Temperatur im Molverhältnis 0,5 : 1 bis 1,5 : 1 in Gegenwart von Säuren oder zu Säuren hydrolysierbaren Verbindungen als Katalysatoren, anschließende Neutralisierung und destillative Entfernung des gebildeten Reaktionswassers, dadurch gekennzeichnet, daß man die so erhaltenen Reaktionsprodukte zusätzlich einer Wasserdampfdestillation unterwirft.

**Claim**

A process for the production of byproduct-free and odorless condensation products from phenols and isobutyraldehyde by reaction of the phenols with isobutyraldehyde at elevated temperature in a molar ratio of 0.5 : 1 to 1.5 : 1 in the presence of an acid or a compound hydrolyzable to an acid, as catalyst, subsequent neutralization and removal of the resulting reaction water by distillation, wherein the reaction products thus obtained are additionally subjected to a steam distillation.

**Revendication**

Procédé de préparation de produits de condensation exempts de produit secondaire et d'odeur, à partir de phénols et d'isobutyraldéhyde, par réaction des phénols avec de l'isobutyraldéhyde, à température élevée, en rapport molaire de 0,5/1 à 1,5/1, en présence, comme catalyseurs, d'acides ou de composés hydrolysables en acides, puis neutralisation et élimination par distillation de l'eau de réaction formée, caractérisé par le fait que l'on soumet additionnellement les produits de réaction, ainsi obtenus, à un entraînement à la vapeur d'eau.